# FASCICULE DE BREVET EUROPEEN

(11) **EP 0 676 180 B1**
(45) Date de publication et mention de la délivrance du brevet: **07.07.1999**
(21) Numéro de dépôt: 95400739.9
(22) Date de dépôt: 03.04.1995
(51) Int. Cl.: A61C 8/00

(54) **Matériel pour la préparation de la loge osseuse d'un implant-lame, support de prothèse dentaire**
Vorrichtung zum Herstellen eines Sitzes im Kieferknochen zur Aufnahme eines Blattimplantates
Apparatus for preparing a recess in the jaw bone for receiving a blade implant

(30) Priorité: 08.04.1994 FR 9404280
(43) Date de publication de la demande: 11.10.1995
(73) Titulaire: POULMAIRE, Francis, F-84000 Avignon (FR); Commissionat, Yves, F-75008 Paris (FR)
(72) Inventeur: POULMAIRE, Francis, F-84000 Avignon (FR); Commissionat, Yves, F-75008 Paris (FR)
(74) Mandataire: Jaunez, Xavier

(56) Documents cités:
- EP-A- 0 495 711
- EP-A- 0 557 899
- WO-A-93/24061
- DE-A- 3 342 413
- FR-A- 2 634 999

## Description

La présente invention concerne un matériel pour le creusement, dans l'os maxillaire, de la loge d'un implant-lame à bords arrondis et à hauteur de col réduite, utilisé notamment comme support de prothèse dentaire, conformément au préambule de la revendication 1.

Les implants-supports de prothèse dentaire utilisés depuis longtemps sous une forme cylindrique trouvent leurs limites dans les secteurs postérieurs des maxillaires édentés. En effet, la faible hauteur d'os résiduel n'assure pas un environnement mécaniquement stable, à cause des bras de levier prothétiques s'exerçant sur l'implant.

Ce volume osseux réduit existant entre la crête édentée et les obstacles anatomiques (fosses nasales, sinus maxillaire, nerf dentaire inférieur, ...) est actuellement exploité grâce à une autre forme d'implant dit "lame". Un tel implant-lame à bords arrondis et à hauteur de col réduite, est décrit dans le document FR-A-2632181, qui sert de base au préambule de la revendication 1, : il comporte une embase en forme de plaque ajourée et un fût. L'embase est munie d'échancrures au voisinage du fût pour un meilleur ancrage tissulaire, et la jonction entre le fût et les deux "ailes" de l'embase est assurée par une bande étroite, éloignée de la crête osseuse.

La mise en place de tels implants-lames de formes plus complexes que les implants cylindriques nécessite une préparation plus complexe de l'os maxillaire : la loge à creuser doit épouser soigneusement la forme de l'implant ; elle doit donc comporter une tranchée longitudinale selon l'axe de l'os maxillaire (pour recevoir l'embase), élargie en son milieu et au milieu de cette tranchée, et une cavité verticale cylindrique, de diamètre plus large que la largeur de la tranchée, qui recevra le fût, ou col, de l'implant. L'intérieur dudit fût sera l'emplacement de la fixation de la prothèse proprement dite.

Le creusement de la loge de l'implant-lame s'effectue en général à l'aide d'une fraise simple. La qualité de cette dite loge et de ses finitions dépend essentiellement de l'habileté et l'adresse de l'opérateur, le chirurgien. En conséquence, cette forme d'implant n'est pas aussi largement utilisée qu'elle pourrait l'être, à cause des difficultés de mise en place et de l'absence de méthode chirurgicale.

On connaît également une autre technique de creusement de la loge d'un implant-lame, selon laquelle il est prévu de forer des puits de stabilisation pour mettre en place une glissière verticale de guidage pour fraise roue, conformément au document FR-A-2634999. Ce document illustre un matériel constitué de fraises à os cylindriques, roues, cylindro-coniques, avec des guides de forage associés à ces différentes fraises, ainsi que de différentes jauges. Les fraises cylindriques servent à forer des puits de stabilisation qui permettent la mise en place d'un guide de forage pour fraise roue : le guidage est réalisé par une glissière verticale, et la profondeur du logement lobé (dont le fond est à profil en arc de cercle) est contrôlée par une jauge dimensionnelle associée. On utilise enfin un guide de forage pour fraise cylindro-conique, qui est alors mis en place par insertion de ses pieds dans les puits de stabilisation précédemment forés.

Cette technique connue présente de nombreux inconvénients. Outre la nécessité de forer des puits de stabilisation, avec en plus une précision aussi élevée que possible puisque l'orientation de la glissière de guidage en dépend, l'agencement de tels puits de stabilisation et de glissières de guidage limite de facto la forme de la tranchée creusée à un profil formé d'un ou plusieurs arcs de cercle. La technique est donc contraignante, et le matériel associé est en outre complexe et onéreux.

L'arrière-plan technologique de l'invention peut enfin être complété en mentionnant les documents DE-A-3342413, EP-A-0495711, EP-A-0557899 et WO-A-93 24061.

La présente invention permet de remédier aux inconvénients précités en proposant un matériel adapté au creusement dans l'os maxillaire de la loge d'un implant-lame à bords arrondis et à hauteur de col réduite, utilisé notamment comme support de prothèse dentaire, comprenant au moins un disque-scie dont le rayon correspond sensiblement à la hauteur de la lame de l'implant-lame pour creuser une tranchée longitudinale rectiligne à fond arrondi dans l'os maxillaire et une jauge dimensionnelle pour contrôler les dimensions de la tranchée caractérisé en ce que la jauge sert aussi à guider, par un canal cylindrique formant trouguide, le foret taillant la cavité cylindrique devant accueillir le col de l'implant-lame et une fraise de finition à butée axiale pour arrondir les angles et affiner les dimensions de ladite tranchée conformément à la revendication 1.

Par conséquent, la présente demande propose un matériel, composé de plusieurs instruments essentiels complémentaires, spécialement étudiés et adaptés, pour la mise en oeuvre d'une nouvelle technique chirurgicale. Cette technique consiste à d'abord creuser une tranchée longitudinale bien rectiligne, grâce à des disques-scies, de préférence d'épaisseurs croissantes, d'affiner la finition de la tranchée à l'aide d'une fraise dite "à finir", en contrôlant les dimensions au moyen d'une jauge de dimensionnement, puis de maintenir cette jauge en place pour guider le foret qui creuse, au milieu de ladite tranchée, une cavité verticale cylindrique de diamètre supérieur à la largeur de la tranchée, destinée à recevoir le fût ou col de l'implant-lame, et enfin, d'insérer l'implant-lame proprement dit dans la loge creusée dans l'os maxillaire. La jauge dimensionnelle assure ainsi une double fonction (contrôler les dimensions de la tranchée et guider le foret taillant la cavité cylindrique du col), ce qui n'était pas le cas dans la technique connue.

Un premier constituant du matériel selon l'invention concerne un ou plusieurs disques-scies, chaque disque-scie étant constitué d'un manche, d'une scie de section circulaire montée perpendiculairement au manche, et d'un système de refroidissement.

Le système de refroidissement est de préférence par circulation de liquide entrant à l'extrémité supérieure du manche, circulant dans un canal interne situé dans l'axe du manche et ressortant par au moins un orifice placé à l'extrémité de l'axe de la scie pour refroidir cette dernière.

De manière avantageuse, ledit matériel comporte plusieurs disques-scies à épaisseur croissante de la scie, le rayon constant de chaque scie correspondant à la hauteur de l'embase de l'implant-lame et l'épaisseur de la dernière scie utilisée étant sensiblement identique à la largeur de l'embase de l'implant-lame.

Le ou les disques-scies permettent donc de creuser de manière "grossière" une tranchée longitudinale rectiligne à fond arrondi dans l'os maxillaire. Le fond arrondi signifie, à ce stade, que le centre de la tranchée est plus profond que les extrémités dans le sens longitudinal.

L'arrondi transversal du fond de la tranchée est réalisé grâce à la fraise dite "à finir", deuxième constituant du matériel selon l'invention. Ladite fraise est une fraise à butée axiale munie elle aussi d'un système de refroidissement comprenant un liquide circulant dans un canal axial, débouchant dans la partie inférieure de la butée axiale de la fraise et irrigant la fraise en fonctionnement pour éviter l'échauffement de celle-ci.

Le troisième constituant du matériel selon l'invention est une jauge dimensionnelle, sorte de gabarit, de forme allongée, de longueur identique à la longueur de la tranchée. Cette jauge présente de préférence une section verticale en forme de T, la hauteur du pied du T correspondant à la profondeur de la tranchée, au-dessus de la crête osseuse, et la partie horizontale du T s'étendant au-dessus de ladite tranchée et possédant en son milieu un canal vertical cylindrique de diamètre voisin de celui du col de l'implant-lame.

De manière préférentielle, la jauge dimensionnelle présente, à une extrémité longitudinale de la partie horizontale supérieure, au moins un orifice pour en faciliter sa préhension, par exemple en y introduisant un insert de manche.

L'ensemble du matériel selon l'invention est en matériau métallique, de préférence en titane recouvert d'une couche mince biocompatible, qui peut être, par exemple, de l'hydroxyapatite ou de l'alumine.

L'invention sera mieux comprise et d'autres caractéristiques de celle-ci seront mises en évidence à l'aide de la description qui suit, en référence aux dessins schématiques annexés, illustrant à titre d'exemple non limitatif, les différents éléments du matériel selon l'invention et dans lesquels :
- les figures la et 1b représentent respectivement selon une coupe axiale longitudinale et selon une vue de côté, l'implant-lame concerné destiné à être mis en place à l'aide du matériel selon l'invention ;
- les figures 2a et 2b représentent, respectivement selon une coupe axiale longitudinale décalée (partie supérieure en coupe) et une vue de côté, une jauge de dimensionnement faisant partie du matériel selon l'invention ;
- les figures 3a et 3b montrent respectivement selon une coupe axiale longitudinale et une coupe selon XX', un disque-soie faisant partie du matériel selon l'invention ;
- la figure 4 montre, en coupe axiale longitudinale, une fraise "à finir" faisant partie du matériel selon l'invention et ;
- la figure 5 présente une vue de face d'un insert de manche pour la préhension de la jauge de dimensionnement.

L'implant-lame (1) à introduire dans l'os maxillaire et qui servira de support à une prothèse dentaire est constitué (voir figures la et 1b) d'une embase (11) en forme d'une plaque allongée et d'un col (ou fût) (12). L'embase (11) est percée d'orifices de section circulaire (13) ou légèrement aplatie (14) la traversant de part en part, et est munie, au voisinage du col (12) et de chaque côté de celui-ci d'échancrures (15). Le col (12) est solidaire de l'embase (11). La hauteur (H2) du col (12) est supérieure à celle de l'embase (H1), et son diamètre (A) est voisin du triple de l'épaisseur (B) de la plaque formant l'embase (11). Il est en outre légèrement évasé à sa partie supérieure (16). Ce profil tronconique inversé renforce cette zone, épicentre des contraintes mécaniques, et de plus favorise un profil d'émergence de la liaison prothétique en continuité avec la prothèse, harmonisant le sillon gingival implantaire.

L'ensemble de l'implant-lame ne présente aucune arête vive, tous les angles et rebords étant arrondis. Le bandeau du col, parfaitement poli, assure en outre la liaison avec la gencive dans des conditions très favorables.

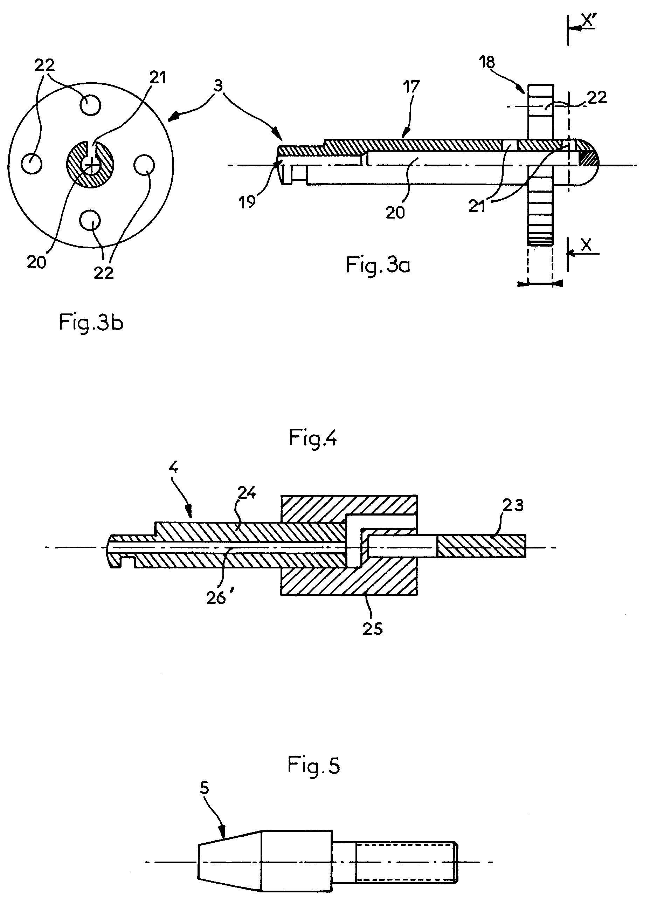

Le premier instrument ou constituant du matériel pour le creusement de la loge de l'implant-lame (1) dans l'os maxillaire est un disque-scie (3) (figures 3a et 3b), constitué d'un manche (17) et d'une scie (18) circulaire, montée perpendiculairement au manche et munie d'un système de refroidissement. Ce système de refroidissement consiste en une circulation de liquide, dont la température est inférieure à 37°C, et qui entre à l'extrémité supérieure du manche (19), traverse le manche (17) en circulant dans un canal interne (20) axial, et ressort, dans le cas de la figure 3a, par deux orifices (21) situés de part et d'autre de l'axe de la scie (18) pour la refroidir. Un tel système évite donc aussi à l'os maxillaire de s'échauffer. La scie (18) est en outre traversée de plusieurs orifices (22) d'aération, répartis symétriquement par rapport à son axe de rotation.

Le travail du ou des disque-scie(s) est complété par celui de la fraise (4), dite fraise "à finir". La fraise proprement dite (23) est reliée à son manche (24) par l'intermédiaire d'une butée axiale (25) qui sert aussi d'organe de liaison. Cette fraise (4) est munie d'un système de refroidissement composé d'un canal axial (26') intérieur au manche (24), qui débouche dans la partie inférieure de la butée (25) de la fraise.

Le liquide de refroidissement présente une température inférieure à celle du corps humain.

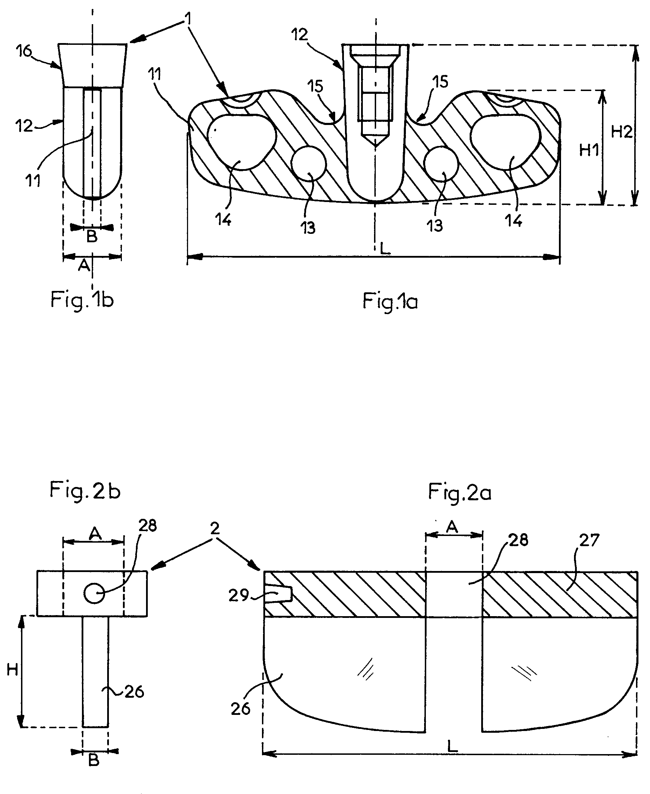

Les dimensions de la tranchée réalisée sont contrôlées grâce à une jauge de dimensionnement (2) qui est de même longueur L que cette tranchée, et que l'implant-lame (1). Cette jauge (2) (voir figures 2a et 2b) présente une section en forme de T. La hauteur (H) du pied (26) du T correspond approximativement à la profondeur de la tranchée donc à la hauteur (H2) totale de l'implant-lame. La partie horizontale (27) du T est percée en son centre d'un canal vertical cylindrique (28) formant trou-guide, de diamètre (A) voisin de celui du col (12) de l'implant-lame (1). Elle est, en outre, munie d'un orifice (29) latéral pour faciliter la préhension de cette jauge, par l'intermédiaire d'un insert de manche (5) représenté à la figure 5.

A titre d'exemple, l'implant-lame (1) sera de longueur (L) voisine de 20 mm, la largeur (B) de l'embase (11) étant de 1,2 mm, et le diamètre (A) du col (12) étant de 3,3 mm et de 3,4 mm dans sa partie supérieure s'il est légèrement évasé. La hauteur totale (H1) de l'embase (11) de l'implant-lame peut être de deux types : par exemple 6 ou 8 mm.

Le fait capital, pour une bonne implantation de l'implant, est que le niveau supérieur de la gaine du col ne dépasse pas de plus d'un millimètre le bord supérieur du corps de la lame. La hauteur (H2) totale de l'implant sera donc de 7 ou 9 mm.

De préférence, des disques-scies d'épaisseur croissante et de rayon constant correspondant à la hauteur (H1) de la lame sont utilisés. Il peut donc s'agir : d'une première scie avec une épaisseur de 0,4 mm (disque guide), d'une deuxième scie (disque intermédiaire) présentant une épaisseur de 0,8 mm et d'un troisième disque (de finition) d'épaisseur égale à celle (B) de la lame, c'est-à-dire, dans l'exemple présent, de 1,2 mm.

La distance entre la butée axiale et l'extrémité de pointe de la fraise de finition est selon l'implant choisie de 7 ou 9 mm.

La tranchée réalisée ainsi est automatiquement rectiligne, à fond arrondi.

Le forage du cylindre central correspondant à l'emplacement du col (12) de l'implant est réalisé grâce au trou-guide (28) de la jauge (2), au moyen de forets présentant des repères à 7 et 9 mm.

L'implant-lame (1) du type précité a les principales indications suivantes :
- crêtes minces de la région molaire mandibulaire,
- insuffisance de volume osseux entre crête et canal mandibulaire (grâce aux lames, une hauteur de 9 à 12 mm sera suffisante),
- implantation sous-sinusienne.

## Revendications

1. Matériel pour le creusement dans l'os maxillaire de la loge d'un implant-lame (1) à bords arrondis et à hauteur de col réduite, utilisé notamment comme support de prothèse dentaire, comprenant au moins un disque-scie (3) dont le rayon correspond sensiblement à la hauteur de la lame de l'implant-lame pour creuser une tranchée longitudinale rectiligne à fond arrondi dans l'os maxillaire et une jauge (2) dimensionnelle pour contrôler les dimensions de la tranchées caractérisé en ce que la jauge sert aussi à guider, par un canal cylindrique (28) formant trou-guide, le foret taillant la cavité cylindrique devant accueillir le col de l'implant-lame (1), et une fraise de finition (4) à butée axiale pour arrondir les angles et affiner les dimensions de la tranchée.

2. Matériel selon la revendication 1, caractérisé en ce que chaque disque-scie est constitué d'un manche (17), d'une scie de section circulaire (18) montée perpendiculairement au manche, et d'un système de refroidissement.

3. Matériel selon la revendication 2, caractérisé en ce que le système de refroidissement est une circulation de liquide qui entre à l'extrémité supérieure (19) du manche (18), circule dans un canal interne (20) situé dans l'axe du manche, et ressort par au moins un orifice (21) placé à proximité de l'axe de la scie pour refroidir cette dernière.

4. Matériel selon la revendication 1, caractérisé en ce que la fraise de finition (4) est également munie d'un système de refroidissement comprenant un liquide circulant dans un canal axial (26'), débouchant dans la partie inférieure de la butée axiale (25) de la fraise, et irrigant la fraise lorsqu'elle est en fonctionnement.

5. Matériel selon la revendication 1, caractérisé en ce que la jauge dimensionnelle (2) est de forme allongée, de longueur (L) identique à la longueur de la tranchée, et présente une section verticale en forme de T, la hauteur (H) du pied du T correspondant à la profondeur de la tranchée, et la partie horizontale (27) s'étendant au-dessus de ladite tranchée et possédant en son milieu un canal vertical cylindrique (28) de diamètre voisin de celui du col de l'implant-lame (1).

6. Matériel selon la revendication 5, caractérisé en ce que la jauge dimensionnelle (2) possède, à une extrémité longitudinale de la partie horizontale supérieure (27), au moins un orifice (29) pour faciliter la préhension de ladite jauge.

7. Matériel selon l'une quelconque des revendications 1 à 6, caractérisé en ce qu'il est en matériau métallique recouvert d'une couche mince biocompatible.

8. Matériel selon la revendication 7, caractérisé en ce que le matériau métallique est du titane.

## Claims

1. Equipment for digging a housing in the maxillary bone for a blade-implant (1) having rounded edges and reduced neck height, for use in particular as a support for a dental prosthesis, the equipment comprising at least one saw disk (3) of radius corresponding substantially to the height of the blade of the blade-implant for digging a round-bottomed rectilinear longitudinal trench in the maxillary bone, and a dimension gauge (2) for monitoring the dimensions of the trench, the equipment being characterized in that the gauge also serves, via a cylindrical channel (28) forming a guide hole, to guide both the drill bit forming the cylindrical cavity that is to receive the neck of the blade-implant (1), and a finishing burr (4) having axial abutment for rounding the corners and refining the dimensions of the trench.

2. Equipment according to claim 1, characterized in that each saw-disk is constituted by a sleeve (17), a saw of circular section (18) mounted perpendicularly to the sleeve, and a cooling system.

3. Equipment according to claim 2, characterized in that the cooling system comprises circulation of a liquid which enters the top end (19) of the sleeve (17), circulates along an internal channel (20) situated on the axis of the sleeve, and leaves via at least one orifice (21) placed close to the axis of the saw to cool it.

4. Equipment according to claim 1, characterized in that the finishing burr (4) is also provided with a cooling system comprising a liquid circulating in an axial channel (26'), the channel opening out into the bottom portion of the axial abutment (25) of the burr, and irrigating the burr when it is in operation.

5. Equipment according to claim 1, characterized in that the dimensional gauge (2) is of elongate shape, of length (L) identical to the length of the trench, and presents a vertical section that is T-shaped, the height (H) of the stem of the T-shape corresponding to the depth of the trench, and the horizontal portion (27) extending over said trench and possessing a cylindrical vertical channel (28) in the middle thereof having a diameter that is close to the diameter of the neck of the blade-implant (1).

6. Equipment according to claim 5, characterized in that the dimension gauge (2) possesses at least one orifice (29) at a longitudinal end of the top horizontal portion (27) thereof for the purpose of making said gauge easier to grasp.

7. Equipment according to any one of claims 1 to 6, characterized in that it is made of metal material covered in a thin biocompatible layer.

8. Equipment according to claim 7, characterized in that the metal material is titanium.

## Patentansprüche

1. Vorrichtung zum Aushöhlen des Sitzes eines Blattimplantates (1) mit abgerundeten Kanten und einer verringerten Halshöhe in dem Kieferknochen, wobei das Blattimplantat insbesondere als Träger einer Zahnprothese verwendet wird, wobei die Vorrichtung mindestens eine Kreissäge (3), deren Radius im wesentlichen der Höhe des Blattes des Blattimplantates entspricht, um in dem Kieferknochen einen länglichen geradlinigen Einschnitt mit abgerundetem Boden auszuhöhlen, und eine Meßlehre (2) zum Kontrollieren der Abmessungen des Einschnittes umfassen, dadurch **gekennzeichnet**, daß die Lehre mittels eines ein Führungsloch bildenden zylindrischen Kanals (28) auch zum Führen des Bohrers dient, der den zur Aufnahme des Halses des Blattimplantates (1) bestimmten zylindrischen Hohlraum bohrt, und daß die Vorrichtung einen Schlichtfräser (4) mit axialem Anschlag zum Abrunden der Ecken und Verfeinern der Abmessungen des Einschnittes umfaßt.

2. Vorrichtung nach Anspruch 1, dadurch **gekennzeichnet**, daß jede Kreissäge einen Stiel (17), ein senkrecht zum Stiel angeordnetes Sägeblatt (18) mit kreisförmigen Querschnitt und ein Kühlsystem hat.

3. Vorrichtung nach Anspruch 2, dadurch **gekennzeichnet**, daß das Kühlsystem ein Flüssigkeitskreislauf ist, der am oberen Ende (19) des Stieles (17) eintritt, in einem inneren in der Achse des Stieles befindlichen Kanal (20) zirkuliert und über mindestens eine Öffnung (21) austritt, die nahe der Achse des Sägeblattes angeordnet ist, um letzteres zu kühlen.

4. Vorrichtung nach Anspruch 1, dadurch **gekennzeichnet**, daß der Schlichtfräser (4) ebenfalls ein Kühlsystem mit einer in einem axialen Kanal (26') zirkulierenden Flüssigkeit hat, wobei der Kanal in den unteren Abschnitt des axialen Anschlages (25) des Fräsers mündet und den Fräser bei Betrieb spült.

5. Vorrichtung nach Anspruch 1, dadurch **gekennzeichnet**, daß die Meßlehre (2) eine längliche Form hat, deren Länge (L) gleich der Länge des Einschnittes ist, und einen vertikalen Querschnitt in Form eines T hat, wobei die Höhe (H) des Fußes des T der Tiefe des Einschnittes entspricht, und der horizontale Abschnitt (27) sich oberhalb dieses Einschnittes erstreckt und in seiner Mitte einen vertikalen zylindrischen Kanal (28) mit einem Durchmesser hat, der in etwa gleich dem des Halses des Blattimplantates (1) ist.

6. Vorrichtung nach Anspruch 5, dadurch **gekennzeichnet**, daß die Meßlehre (2) an einem Längsende des oberen horizontalen Abschnittes (27) mindestens eine Öffnung (29) hat, um das Ergreifen dieser Lehre zu erleichtern.

7. Vorrichtung nach einem der Ansprüche 1 bis 6, dadurch **gekennzeichnet**, daß sie aus einem metallenen Material besteht, das mit einer dünnen biokompatiblen Schicht überzogen ist.

8. Vorrichtung nach Anspruch 7, dadurch **gekennzeichnet**, daß das metallene Material Titan ist.
